Europäisches Patentamt

European Patent Office

Office européen des brevets

(19)

(11) **EP 1 305 172 B1**

(12) **FASCICULE DE BREVET EUROPEEN**

(45) Date de publication et mention
de la délivrance du brevet:
**03.11.2004  Bulletin 2004/45**

(21) Numéro de dépôt: **01951684.8**

(22) Date de dépôt: **17.07.2001**

(51) Int Cl.⁷: $B60C\ 11/13$

(86) Numéro de dépôt international:
**PCT/EP2001/008211**

(87) Numéro de publication internationale:
**WO 2002/007995 (31.01.2002 Gazette 2002/05)**

(54) **PROFIL DE SURFACE D'ELEMENTS DE SCULPTURE D'UNE BANDE DE ROULEMENT POUR PNEUMATIQUE**

LAUFFLÄCHENPROFIL FÜR EINEN FAHRZEUGLUFTREIFEN

SURFACE PROFILE OF TREAD DESIGN ELEMENTS OF A RUNNING TREAD FOR TYRE

(84) Etats contractants désignés:
**AT BE CH CY DE DK ES FI FR GB GR IE IT LI LU
MC NL PT SE TR**

(30) Priorité: **24.07.2000  FR 0009700**

(43) Date de publication de la demande:
**02.05.2003  Bulletin 2003/18**

(73) Titulaires:
• **Sociéte de Technologie Michelin
63000 Clermont-Ferrand Cedex 09 (FR)**
• **MICHELIN RECHERCHE ET TECHNIQUE S.A.
CH-1763 Granges-Paccot (CH)**

(72) Inventeur: **RADULESCU, Robert
F-63170 P rignat les Sarlieve (FR)**

(74) Mandataire: **Diernaz, Christian
Michelin & Cie
Service SGD/LG/PI-LAD
63040 Clermont-Ferrand Cedex 09 (FR)**

(56) Documents cités:
**EP-A- 0 393 873          EP-A- 1 074 405
FR-A- 2 317 112          US-A- 3 532 147
US-A- 5 503 208**

• **PATENT ABSTRACTS OF JAPAN vol. 1997, no.
07, 31 juillet 1997 (1997-07-31) & JP 09 066708 A
(YOKOHAMA RUBBER CO LTD:THE), 11 mars
1997 (1997-03-11)**

## Description

L'invention concerne les bandes de roulement pour pneumatiques destinées à équiper les véhicules poids lourd plus particulièrement la géométrie de surface des éléments de relief formant la sculpture desdites bandes.

Pour obtenir des performances d'adhérence satisfaisantes sur chaussée mouillée, il est connu de pourvoir la bande de roulement d'un pneumatique avec une sculpture formée par une pluralité de rainures délimitant des motifs de relief ayant la forme de nervures ou bien la forme de blocs. En outre, il est également possible de pourvoir une pluralité d'éléments de relief ainsi formés avec au moins une fente se présentant sous la forme d'une rainure de faible largeur (dite incision) voire de largeur nulle ("sipe") de manière à créer un grand nombre d'arêtes pour couper la couche d'eau recouvrant la chaussée mouillée.

Compte tenu de l'existence de mouvements de glissements de faible amplitude entre la bande de roulement d'un pneumatique et la chaussée au cours du roulage d'un véhicule équipé de pneumatiques, il se produit une usure progressive et régulière. On constate qu'il peut se superposer à cette usure dite "régulière" une usure dite "irrégulière" plus prononcée sur certaines régions des éléments de relief formant la sculpture de cette bande.

On observe, notamment dans le cas de pneumatiques pour poids lourd destinés à être montés sur l'essieu avant (c'est-à-dire destinés à équiper l'essieu avant directeur d'un véhicule poids lourd), qu'il se développe, au voisinage des arêtes longitudinales d'une nervure, lesdites arêtes délimitant la face de contact de la nervure, une usure plus prononcée que sur le reste de la face de contact de ladite nervure. Pour combattre cette usure irrégulière dite en "rail", il a été proposé différentes solutions consistant notamment à pourvoir les arêtes des nervures avec une pluralité d'incisions transversales. Cette solution n'est toutefois pas sans inconvénient puisqu'elle implique une mise en oeuvre industrielle coûteuse résultant du grand nombre de lamelles à mettre dans le moule de moulage de la bande de roulement; en outre, cette solution modifie localement la rigidité des nervures.

D'autre part dans le cas de pneumatiques destinés à équiper un essieu moteur d'un véhicule poids lourd (essieu auquel est transmis soit un couple moteur soit un couple freineur), il est connu de pourvoir les bandes de roulement de ces pneumatiques avec des sculptures formées d'une pluralité de blocs délimités par des rainures d'orientation sensiblement transversale et circonférentielle. Chaque bloc de la sculpture comporte une face dite d'attaque et une face de fuite, chacune desdites faces coupant la face de contact du bloc pour former une arête (respectivement arête d'attaque et arête de fuite), l'arête d'attaque entrant dans la région de contact du pneumatique avec la chaussée avant l'arête de fuite. On constate, compte tenu des mécanismes de roulage combinés aux efforts moteur et freineur agissant par intermittence sur ces pneumatiques (correspondant respectivement aux phases d'accélération et de freinage du véhicule), qu'il se développe une usure plus prononcée des blocs au voisinage des arêtes de fuite et/ou d'attaque comparativement à l'usure observée sur le reste de la surface du bloc (usure dite "dent de scie").

Parmi les solutions proposées pour résoudre ce problème d'usure irrégulière, il a été proposé de modifier les rigidités de compression des blocs au voisinage des arêtes d'attaque et/ou de fuite en réalisant soit des trous soit des incisions orientés sensiblement dans la direction de l'épaisseur de la bande de roulement. Ces solutions sont bien évidemment coûteuses et délicates à régler convenablement. Une autre solution a été proposée selon laquelle, pour éviter l'apparition et le développement d'une usure plus prononcée sur l'arête de fuite d'un bloc, l'angle d'inclinaison de la face d'attaque avec la surface de roulement est supérieur à 90°, ledit angle étant mesuré à l'intérieur du bloc en partant de sa face supérieure et en allant vers la face d'attaque (un angle supérieur à 90° correspond par définition à un angle de dépouille positif). Cette solution se révèle efficace en usure sur le bord de fuite, mais en fait la vitesse d'usure de l'ensemble du bloc est sensiblement augmentée, ce qui se traduit par une durée de vie sur usure réduite par rapport au potentiel initial de cette sculpture.

Un objet de l'invention est de proposer des bandes de roulement destinées à des pneumatiques pour des essieux avant ou des essieux arrières de véhicules poids lourd qui permettent d'obtenir des performances satisfaisantes en usure en roulage sans créer d'usure irrégulière et sans occasionner un surcoût industriel important.

Une bande de roulement selon l'invention pour pneumatique destiné à équiper un véhicule poids lourd comprend au moins un motif de relief ou élément de relief (sous la forme d'une nervure ou d'un bloc) et comporte les caractéristiques des revendications 1 et 4 respectivement.

L'indice i utilisé dans la présente description peut prendre la valeur 1 ou la valeur 2.

Si la distance $H_i$ est inférieure à 0.1 mm, l'incidence sur l'usure n'est pas perceptible. Si $H_i$ est supérieure à 2.5 mm, l'effet des bosses sur les pressions de contact entre la bande de roulement et la chaussée devient trop prépondérant par rapport à ce qui se passe dans la partie médiane de la nervure (au voisinage du point C) et il se produit alors une usure plus prononcée sur ladite partie médiane.

Préférentiellement le profil P est formé entre le point $B_i$ et l'arête $A_i$ la plus proche, par un profil géométrique convexe c'est-à-dire situé à l'extérieur d'une droite passant par $A_i$ et $B_i$ et de courbure sensiblement constante; en outre, entre $B_i$ et $C$, le profil $P$ est situé au dessous de la droite passant par $B_i$ et $C$.

Dans le cas d'un pneumatique pour véhicule poids lourd ayant une bande de roulement pourvue d'une sculpture comportant au moins une nervure continue d'orientation sensiblement longitudinale, il est judicieux de prévoir la présence d'une bosse continue dans la direction longitudinale de la nervure au voisinage de chacune des arêtes limitant la face de contact de ladite nervure. La face de contact présente dans un plan de coupe transversal (c'est-à-dire un plan contenant la direction transversale de la bande de roulement et sensiblement perpendiculaire à la face de contact de ladite bande), une trace ayant un profil géométrique **P** s'étendant entre des points A1 et A2 situés chacun sur une des arêtes de la nervure (correspondant aux limites de contact de ladite nervure avec le sol dans les conditions nominales d'utilisation du pneumatique), ledit profil géométrique étant caractérisé en ce que :

- ce profil P présente deux bosses en relief par rapport à une droite virtuelle passant par les points **A1** et **A2,** la première bosse étant située au voisinage de l'arête passant par **A1,** la seconde bosse étant située au voisinage de l'arête passant par **A2,**

- le point **B1** de la première bosse le plus à l'extérieur par rapport à la bande est situé à une distance **H1** de la droite passant par **A1** et **A2** et à une distance **D1** du point **A1**, la distance **D1** étant mesurée par rapport à une perpendiculaire à la droite passant par **A1** et **A2** et passant par le point **A1;**

- le point **B2** de la seconde bosse le plus à l'extérieur par rapport à la bande étant situé à une distance **H2** de la droite passant par **A1** et **A2** et à une distance **D2** du point A2, la distance D2 étant mesurée par rapport à une perpendiculaire à la droite passant par **A1** et **A2** et passant par le point **A2;**

- ce profil P passe entre les points **B1** et **B2** par un point **C** situé à une distance **Hc** de la droite passant par **A1** et **A2;**

- $0.1 \leq$ **D1**/L $\leq$ **0.25** ; où L est la distance entre les points **A1** et **A2;**

- $0.1 \leq$ **D2**/L $\leq$ **0.25 ;**

- **0.1** mm $\leq$ **H1** $\leq$ **2.5** mm;

- **0.1** mm $\leq$ **H2** $\leq$ **2.5** mm;

- **0** mm $\leq$ **Hc** $\leq$ (**H1+H2**)/**4**.

À la différence de l'enseignement du document FR 2317112 selon lequel il est réalisé un méplat près de chacune des arêtes d'une nervure circonférentielle, la présente invention réalise, par le profil adopté entre l'arête Ai et le point Bi, une diminution sensible des déformations due à l'effet de Poisson (déformations transversales résultant d'un effort de compression) lors du passage dans le contact avec le sol dans la région proche de chaque arête Ai; ainsi il est possible de réduire les déplacements des points de la nervure au voisinage de chaque arête et en conséquence de réduire l'usure.

Préférentiellement, dans le cas d'un pneumatique destiné à être monté sur un essieu avant d'un véhicule poids lourd, ce pneumatique comportant une sculpture essentiellement composée de nervures circonférentielles, les hauteurs H1 et H2 vérifient :

- **0.1** mm $\leq$ **H1** $\leq$ **0.4** mm;

- **0.1** mm $\leq$ **H2** $\leq$ **0.4** mm.

Dans le cas d'une bande de roulement ayant au moins une nervure d'orientation circonférentielle pourvue conformément à l'invention de deux bosses de hauteur **H1** et **H2**, il est avantageux de monter un pneumatique pourvu d'une telle bande sur un véhicule poids lourd de façon à positionner la bosse de plus forte amplitude (**H1** ou **H2**) axialement vers l'extérieur dudit véhicule pour équilibrer aux mieux les pressions dans l'aire de contact.

Une variante préférentielle consiste à placer le point C du profil P entre les points **B1** et **B2** sur la droite passant par **A1** et **A2** (c'est-à-dire **Hc=0**). Dans une autre variante préférentielle, le point C du profil P situé à une distance minimale de la droite passant par les points **A1** et **A2** est sensiblement à égale distance des points **A1** et **A2.**

Il est préférable que ces conditions soient effectivement satisfaites quand le pneumatique pourvu de la bande de roulement selon l'invention est monté sur sa jante de montage et gonflé à sa pression nominale de gonflage.

La présence de bosses, selon l'invention, s'étendant dans la direction de chaque nervure permet, en modifiant la répartition des pressions de contact entre ladite nervure et la chaussée d'éviter l'apparition de phénomènes de glissement entre ladite chaussée et ladite nervure et par conséquent d'éviter le développement d'une usure localisée au voisinage de l'une ou l'autre arête, au moins lorsque ladite bande est neuve.

On considère maintenant le cas d'un pneumatique pour un véhicule poids lourd ayant une bande de roulement pourvue d'une sculpture comportant une pluralité de blocs, chaque bloc étant délimité par des rainures et/ou incisions d'orientation générale circonférentielle et transversale. Ces blocs présentent une face supérieure formant une partie de la surface de roulement du pneumatique et destinée à venir en contact avec la chaussée pendant le roulage, deux faces latérales espacées dans la direction transversale (correspondant à la direction axiale du pneumatique) et des faces avant et arrière. La face avant coupe la face supérieure selon une première arête dite arête d'attaque (correspondant à l'arête du bloc qui rentre la première en contact avec la chaussée au cours du roulage), tandis que la face arrière coupe la face supérieure selon une seconde arête dite arête de fuite.

On propose également de remédier aux inconvénients soulignés en introduction et en particulier d'empêcher l'apparition d'usure irrégulière sur une sculpture de bande de roulement comportant une pluralité de blocs de gomme, chaque bloc étant délimité par des rainures d'orientation sensiblement longitudinale et par des rainures d'orientation sensiblement transversale, chaque bloc comportant une face supérieure destinée à venir en contact avec la chaussée au cours du roulage et des faces latérales, l'intersection de la face supérieure avec chacune des faces latérales formant une arête.

La sculpture conforme à l'invention est telle qu'à l'état neuf au moins un bloc de la bande de roulement est caractérisé en ce que, vu dans tout plan de coupe longitudinal (c'est-à-dire tout plan contenant la direction longitudinale de la bande de roulement et sensiblement perpendiculaire à la face de contact du bloc), la trace de sa face de contact sur ce plan est définie par un profil géométrique s'étendant entre deux points **A1** et **A2**, **A1** étant le point d'intersection de l'arête d'attaque avec le plan de coupe et **A2** étant le point d'intersection de l'arête de fuite avec ce même plan de coupe, ce profil géométrique P étant caractérisé en ce que :

- ce profil P présente au moins une première bosse continue en relief par rapport à une droite virtuelle passant par les points **A1** et **A2,** cette première bosse étant située au voisinage de l'une des arêtes d'attaque ou de fuite, le point **Bi** du profil P le plus à l'extérieur par rapport à la bande est situé à une distance **Hi** de la droite passant par **A1** et **A2** et à une distance **Di** du point le plus proche **A1** ou **A2**, ladite distance **Di** étant mesurée par rapport à une perpendiculaire à la droite passant par **A1** et **A2** et passant par le point **A1** ou **A2** le plus proche;

- ce profil P passe par un point C situé à une distance **Hc** de la droite passant par **A1** et **A2** et sensiblement à mi distance entre les points **A1** et **A2;**

- $0.1 \leq Di/L \leq 0.25$ , où L est la distance séparant les points **A1** et **A2;**

- $0.1 \text{ mm} \leq Hi \leq 2.5 \text{ mm};$

- $0 \text{ mm} \leq Hc \leq Hi/2.$

Dans le cas d'un pneumatique prévu par exemple pour être monté sur un essieu moteur et compte tenu de l'application d'un couple moteur ou d'un couple freineur, il est judicieux de prévoir la présence d'une première bosse continue au voisinage de l'arête d'attaque et une seconde bosse continue au voisinage de l'arête de fuite, lesdites deux bosses n'ayant pas nécessairement les mêmes formes. Vue dans tout plan de coupe longitudinal, la trace de la face de contact sur ce plan est définie par un profil géométrique **P** s'étendant entre deux points **A1** et **A2**, **A1** étant le point d'intersection de l'arête d'attaque avec le plan de coupe et A2 étant le point d'intersection de l'arête de fuite avec ce même plan de coupe, ce profil géométrique P étant caractérisé en ce que :

- ce profil P présente une première bosse et une seconde bosse continues et en relief par rapport à une droite virtuelle passant par les points **A1** et **A2,** la première et la seconde bosse étant situées au voisinage respectivement de l'arête d'attaque et de l'arête de fuite, le point **B1** de la première bosse le plus à l'extérieur par rapport à la bande étant situé à une distance **H1** de la droite passant par **A1** et **A2** et à une distance **D1** du point **A1,** ladite distance **D1** étant mesurée par rapport à une perpendiculaire à la droite passant par **A1** et **A2** et passant par le point **A1,** le point **B2** de la seconde bosse le plus à l'extérieur par rapport à la bande étant situé à une distance **H2** de la droite passant par **A1** et **A2** et à une distance **D2** du point **A2,** ladite distance **D2** étant mesurée par rapport à une perpendiculaire à la droite passant par **A1** et **A2** et passant par le point **A2;**

- ce profil P passe par un point **C** situé à une distance **Hc** de la droite passant par **A1** et **A2** et sensiblement à mi distance entre les points **A1** et **A2;**

- $0.1 \leq D1/L \leq 0.25$ et $0.1 \leq D2/L \leq 0.25$ où L est la distance séparant les points **A1** et **A2;**

- $0.1 \text{ mm} \leq H1 \leq 2.5 \text{ mm};$ et $0.1 \text{ mm} \leq H2 \leq 2.5 \text{ mm};$

- $0 \text{ mm} \leq Hc \leq (H1+H2)/4.$

Pour tenir compte de la dissymétrie de sollicitations résultant des couples moteur ou freineur appliqués, il est judicieux de prévoir que le profil de la face de contact, vu dans un plan de coupe longitudinal, est dissymétrique, la distance **D2** du point **B2** à la droite perpendiculaire à la droite **A1A2** et passant par **A2** étant supérieure à la distance **D1** du point **B1** à la droite passant par **A1** et perpendiculaire à la droite passant par **A1** et **A2** (préférentiellement $0.1 < D1/D2 < 1.0$).

Le domaine d'application des bandes de roulement conformes à l'invention comprend également les bandes dont les blocs ont des faces avant présentent des angles de dépouille positif comme cela a été rappelé plus haut afin de réduire l'usure près du bord de fuite. Dans ce cas particulier, il est judicieux, pour une bande de roulement présentant une pluralité de blocs dont au moins certains d'entre eux présentent une face attaque dont l'angle moyen avec la surface de contact desdits blocs est supérieur à 90° (cet angle étant mesuré à l'intérieur dudit bloc) de combiner cette disposition selon l'art antérieur avec la présence d'une bosse continue sur la face de contact au voisinage de l'arête d'attaque ou au voisinage de l'arête de fuite. Cette bosse continue est telle que la trace de la face de contact des blocs sur un plan de coupe longitudinal est définie par un profil géométrique P s'étendant entre deux points **A1** et **A2, A1** étant le point d'intersection de l'arête d'attaque avec le plan de coupe et **A2** étant le point d'intersection de l'arête de fuite avec ce même plan de coupe, ce profil géométrique **P** étant caractérisé en ce que :

- ce profil P présente une bosse en relief par rapport à une droite virtuelle passant par les points **A1** et **A2,** cette bosse étant située au voisinage de l'arête d'attaque ou de l'arête de fuite, le point **Bi** dudit profil le plus à l'extérieur par rapport à la bande est situé à une distance **Hi** de la droite passant par **A1** et **A2** et à une distance **Di** du point **A1** ou **A2** le plus proche, ladite distance **Di** étant mesurée par rapport à une droite perpendiculaire à la droite passant par **A1** et **A2** et passant par le point **A1** ou **A2;**

- ce profil P passe par un point **C** situé à une distance **Hc** de la droite passant par **A1** et **A2** et sensiblement à mi distance entre les points **A1** et **A2;**

- $0.1 \le$ **Di/L** $\le 0.25$ , où L est la distance séparant les points **A1** et **A2;**

- $0.1$ mm $\le$ **Hi** $\le 2.5$ mm;

- $0$ mm $\le$ **Hc** $\le$ **Hi/2**.

D'autres caractéristiques et avantages de l'invention ressortent de la description faite ci-après en référence aux dessins annexés qui montrent, à titre d'exemples non limitatifs, des formes de réalisation de l'objet de l'invention.

- figure **1** : vue générale partielle d'une sculpture d'un pneumatique comportant quatre nervures selon l'invention et destiné à équiper l'essieu avant d'un véhicule poids lourd;

- figure **2** : vue en coupe selon la ligne II-II de la figure **1**;

- figure **3** : vue en plan d'une sculpture de pneumatique poids lourd destiné à équiper un essieu moteur;

- figure **4** : vue en coupe selon la ligne IV-IV d'un bloc de la partie médiane de la sculpture représentée à la figure **3**;

- figure **5** : vue en coupe circonférentielle selon la ligne V-V d'un bloc de la partie épaule de la sculpture de la figure **3**.

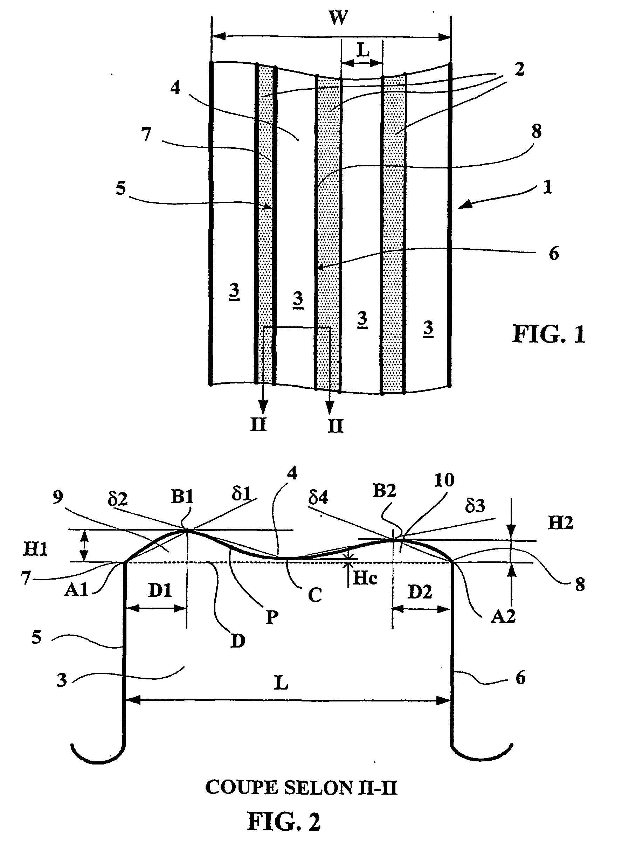

Sur la figure 1 est représentée en plan la surface extérieure d'une bande de roulement 1 d'un pneumatique destiné à être monté sur un essieu avant d'un véhicule poids lourd. Cette bande de roulement 1 de largeur W est pourvue d'une sculpture comprenant trois rainures **2** d'orientation circonférentielle délimitant quatre nervures circonférentielles **3** et sensiblement de même largeur **L**. Deux des nervures **3** forment ce que l'on nomme les bords de la bande de roulement et encadrent deux nervures intermédiaires. Chaque nervure 3 comprend :

- une face de contact **4** radialement à l'extérieur destinée à venir en contact avec la chaussée pendant le roulage d'un pneumatique pourvue de cette bande de roulement et

- deux faces latérales **5, 6** s'étendant sensiblement radialement dans l'épaisseur de la bande.

Chaque face latérale **5, 6** coupe la face de contact **4** pour former une arête **7,8**.

Pour éviter l'apparition d'une usure plus prononcée sur ces arêtes **7, 8** comparativement à l'usure moyenne de la partie de la face de contact **4** située entre lesdites arêtes, il est réalisé sur la face de contact de chaque nervure et à proximité de chaque arête un relief continu dans la direction circonférentielle (visibles sur la figure **2**). La face de contact **4** présente, vue en coupe transversale selon la ligne II-II montrée à la figure **2**, une trace **P** présentant deux bosses **9, 10** radialement à l'extérieur d'une droite virtuelle **D,** tracée en traits pointillés et passant par les points **A1** et **A2** (respectivement intersections des arêtes 7, 8 avec le plan de coupe transversale). Par plan de coupe transversale, on entend un plan de coupe contenant la direction axiale de la bande de roulement et perpendiculaire à la direction circonférentielle de la bande une fois celle-ci en place sur un pneumatique.

Une première bosse **9** s'étend entre le point **A1** et un point **B1** radialement le plus éloigné de la droite **D**. Ce point **B1** est situé à une distance **H1** de la droite **D** et à une distance **D1** du point **A1,** ladite distance étant mesurée parallèlement à la droite **D**.

Une seconde bosse **10** s'étend entre le point **A2** et un point **B2** radialement le plus éloigné de la droite **D**. Ce point **B2** est situé à une distance **H2** de la droite **D** et à une distance **D2** du point **A2,** ladite distance étant mesurée parallèlement à la droite **D**.

Les deux bosses **9, 10** sont de hauteurs différentes, la bosse **9** de plus grande hauteur **H1** étant préférentiellement située sur la face de contact de la nervure au voisinage de l'arête **7** la plus proche de l'extérieur axialement de la bande de roulement.

En outre, la trace P de la face de contact dans le plan de coupe passe par un point C qui est dans le cas présent situé à une distance **Hc** inférieure à la moitié de la hauteur **H2** au dessus de la droite **D**.

Préférentiellement le profil géométrique de la trace de la face de contact de chaque bnervure, comme montré à la figure **2,** est constitué de la façon suivante :

- un tronçon **A1B1** convexe et entièrement situé à l'extérieur d'une droite δ**1** passant par **A1** et **B1,** ce tronçon étant tangent en **B1** à une droite parallèle à la droite passant par **A1** et **A2 ;**

- un tronçon **B1C** entièrement situé à l'intérieur d'une droite δ**2** passant par **B1** et **C** et ayant une tangente en **C** parallèle à la droite **D** passant par **A1** et **A2;**

- un tronçon **CB2** également entièrement situé à l'intérieur d'une droite δ**3** passant par **B2** et **C** et se raccordant de façon tangente en **C** au tronçon **B1C;**

- un tronçon **B2A2** convexe et entièrement situé à l'extérieur d'une droite δ**4** passant par **A2** et **B2,** ce tronçon étant tangent en **B2** à une droite parallèle à la droite **D** passant par **A1** et **A2.**

Ce qui est décrit ici pour des nervures rectilignes, vues dans le plan de la figure, s'applique également au cas de nervures présentant une orientation locale non nécessairement circonférentielle (par exemple de forme ondulée ou en zigzag).

Des simulations ont été effectuées sur un pneumatique de dimension **315/80 R 22.5** comportant une sculpture formée de nervures présentant chacune deux bosses continues avec les valeurs suivantes :

$$L = 38 \text{ mm}, W = 250 \text{ mm}$$

$$D1 = D2 = 4.5 \text{ mm et } H1 = H2 = 0.3 \text{ mm}.$$

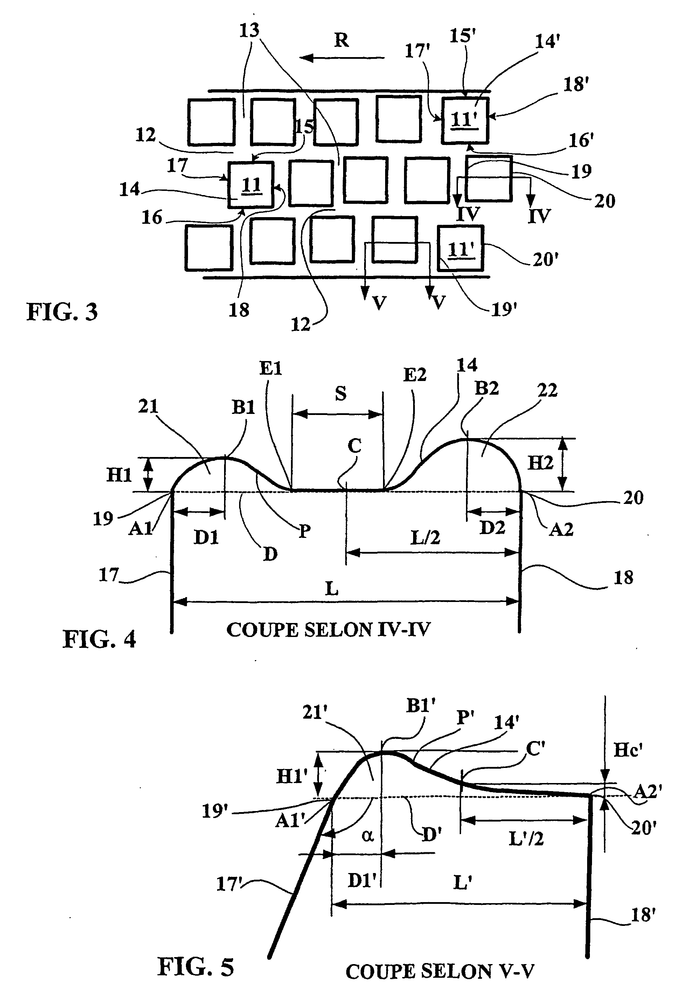

Avec la figure **3** est décrite une variante de sculpture d'un pneumatique comportant une pluralité de blocs **11, 11'** délimités dans le cas présenté par des rainures d'orientation circonférentielle **12** et transversale **13;** ce type de sculpture est notamment destiné à être monté sur un essieu moteur. Ce qui est décrit ici avec une sculpture à blocs délimités par des rainures s'applique également au cas d'une sculpture dont les blocs sont délimités par des rainures circonférentielles et des incisions d'orientation sensiblement transversale. Dans cet exemple, cette sculpture comporte deux rangées de blocs 11' aux bords limitant axialement la bande de roulement, ces deux rangées encadrant une rangée intermédiaire de blocs **11.** Chaque bloc de sculpture **11, 11'** comporte une face de contact **14, 14'** et deux faces latérales **15, 16, 15', 16'** délimitant des rainures circonférentielles **12** et deux faces avant et arrière **17, 18, 17', 18'** (dites faces d'attaque et de fuite respectivement) par rapport au sens de roulage repéré sur la figure **3** par une flèche **R**. La face d'attaque et la face de fuite coupent la face de contact selon une arête d'attaque **19, 19'** et de fuite **20, 20'** respectivement.

Pour éviter l'apparition d'usure plus prononcée au voisinage de l'arête d'attaque **19, 19'** et de l'arête de fuite **20, 20'** de chaque bloc **11, 11',** il est proposé de réaliser sur chacun des blocs **11** de la rangée médiane et au voisinage des arêtes d'attaque **19** et de fuite **20** desdits blocs un motif de relief s'étendant le long de chacune desdites arêtes. Plus précisément et comme cela est clairement visible sur la figure 4 montrant un bloc **11** de la rangée médiane vu dans un plan de coupe (**IV-IV**) perpendiculaire à la fois à la face de contact **14** et à la direction transversale dudit bloc, la trace P de la face de contact **14** comporte une première et une seconde bosse **21, 22** s'étendant le long des arêtes d'attaque **19** et de fuite **20.** La première bosse **21,** prévue au voisinage de l'arête d'attaque **19,** présente un tracé s'étendant entre le point **A1** -intersection de l'arête d'attaque **19** avec le plan de coupe- et un point **B1** situé à une distance **D1** de la ligne droite passant par **A1** et perpendiculaire à la ligne droite passant par **A1** et **A2,** et à une distance **H1** de la ligne droite **D** passant par **A1** et **A2.** La seconde bosse **22,** au voisinage de l'arête de fuite **20,** présente un tracé s'étendant entre le point **A2** - intersection de l'arête de fuite avec le plan de coupe - et un point **B2** situé à une distance **D2** de la ligne droite passant par **A2** et perpendiculaire à la ligne droite **D** passant par **A1** et **A2,** et à une distance **H2** de la ligne droite passant par **A1** et **A2.**

Le tracé de la surface de contact des blocs **11** comporte entre les deux bosses **21, 22** une partie sensiblement confondue avec la droite **D** passant par **A1** et **A2,** cette partie d'une largeur **S** s'étendant entre des points **E1** et **E2,** la largeur **S** étant sensiblement égale à la distance séparant les points **A1** et **E1** (ou celle séparant les points **A2** et **E2**), dans l'exemple présenté de manière non limitative.

Le point **C** par lequel passe le profil reliant les points **B1** et **B2** est situé sur la ligne droite **D** passant par **A1** et **A2** (**Hc = 0**) et sensiblement à mi distance des points **A1** et **A2.**

Dans le cas présent, la hauteur **H1** de la bosse située près de l'arête d'attaque **19** est inférieure à la hauteur **H2** de la bosse située près de l'arête de fuite **20.**

Par ailleurs, les blocs **11'** des rangées bords de la sculpture présentent la particularité d'avoir leur face d'attaque **19'** qui forment un angle de dépouille α supérieur à **90°** avec la face de contact **14'** (la mesure étant faite à l'intérieur dudit bloc, en partant de ladite face de contact). Pour ces blocs **11',** il est avantageux de prévoir la présence d'un motif de relief le long de l'arête d'attaque **19'.** Vu en coupe selon **V-V** (figure **5**), le tracé P' de la face de contact **14',** s'étendant entre les points **A1** et **A2** sur les arêtes d'attaque et de fuite, est pourvu d'une seule bosse **21'** passant par un point **B1'** situé à une distance **H1'** de la ligne passant par **A1'** et **A2'** et à une distance **D1'** de la ligne droite passant par le point **A1'** et perpendiculaire à la ligne passant par **A1'** et **A2'**. En outre, ce tracé P' passe par un point **C'** situé sensiblement à mi distance de **A1'** et de **A2'** et situé à une hauteur **Hc',** par rapport à la ligne droite passant par **A1'** et **A2',** supérieure à zéro et inférieure à la moitié de la hauteur **H1'**. Ce tracé P' se prolonge ensuite de manière régulière et monotone jusqu'au point **A2'** sur l'arête de fuite **20'**. Avantageusement, un motif de relief le long de l'arête d'attaque 19' est combiné avec un angle de dépouille α compris entre 95° et 110°. La disposition décrite avec le support de la figure **5** est particulièrement avantageuse pour des pneumatiques de poids lourd subissant des couples moteurs.

Une autre variante à cette dernière réalisation consiste à pourvoir la surface des blocs des rangées bords avec une seule bosse située au voisinage de l'arête de fuite tout en ayant la face d'attaque formant un angle de dépouille supérieur à 90° (cette disposition est particulièrement favorable dans le cas de pneumatiques montés sur des essieux de véhicules poids lourd dotés de dispositif ralentisseur). Dans ce cas, l'angle de dépouille est préférentiellement compris entre 95° et 110°.

Ce qui a été décrit avec le support des figures **3** à **5** n'est bien entendu qu'un exemple et d'autres combinaison rentrent bien sûr dans le cadre de l'objet de l'invention : par exemple, tous les blocs peuvent être conformes à ce qui est montré soit à la figure **4** soit à la figure **5**.

Préférentiellement, la trace de la surface extérieure de chaque nervure sur un plan de coupe transversal suit, entre le point **A1** et le point **B1** et entre **B2** et **A2,** un profil convexe c'est-à-dire un profil qui ne présente pas de changement de signe de sa courbure et qui est entièrement situé d'un même côté par rapport à la ligne droite virtuelle passant par **A1** et **B1** pour le profil entre **A1** et **B1,** et par rapport à la ligne droite virtuelle passant par **A2** et **B2** pour le profil entre **B2** et **A2.** Cette disposition permet d'obtenir une meilleure efficacité de chaque "bosse" ainsi formée sur la surface de roulement de chaque nervure.

Un essai comparatif de roulage d'usure a été réalisé en dimension 315/80 R 22.5. Tous les blocs de sculpture du pneumatique selon l'invention présentaient sur leur face d'attaque un angle de dépouille de 102°. En outre, et vu en coupe selon un plan perpendiculaire à l'axe de rotation, chaque bloc avait à l'état neuf :

- une bosse continue formée près de l'arête de fuite de hauteur maximale égale à 1 mm, cette hauteur étant mesurée par rapport à ligne passant par l'arête d'attaque et l'arête de fuite,

- le point de cette bosse le plus éloigné de la ligne passant par les arêtes d'attaque et de fuite à une distance égale à 10 mm de la ligne droite passant par le point sur l'arête de fuite et perpendiculaire à la ligne passant par l'arête d'attaque et l'arête de fuite.

L'essai a consisté à faire rouler sur véhicule et sur circuit de tels pneumatiques selon l'invention en comparaison avec des pneumatiques de référence de même sculpture ne présentant pas de profil de surface selon l'invention. La demanderesse a constaté qu'avec une sculpture selon l'invention, l'usure était à la fois plus régulière et réduite comparée à celle qui était obtenue avec pneumatique de référence.

L'invention n'est pas limitée aux exemples décrits et représentés et diverses modifications peuvent y être apportées sans sortir de son cadre.

Il est possible d'envisager une autre combinaison selon laquelle une sculpture est formée dans sa partie médiane d'une pluralité de blocs et sur ses bords de nervures. Les nervures sont pourvues d'au moins une bosse continue dans la direction circonférentielle sur au moins l'une des arêtes desdites nervures, et les blocs sont pourvus sur leur face de contact avec au moins une bosse s'étendant dans la direction transversale.

Il est également à la portée de l'homme du métier, dans le cas d'une sculpture comportant une pluralité de blocs de combiner à la fois la présence de bosses continues sur les arêtes de fuite et d'attaque et la présence d'au moins une bosse continue sur les autres arêtes délimitées par des rainures sensiblement circonférentielles.

Une variante de l'invention consiste à réaliser une sculpture comportant une pluralité de blocs disposés selon des rangées médiane, intermédiaires et bord ; les blocs des rangées médianes étant dépourvus de bosses tandis que les blocs des rangées intermédiaires et des rangées bord sont pourvus chacun d'une bosse près de leur arête de fuite. Les blocs des rangées intermédiaires ont une bosse de hauteur maximale égale à la moitié de la hauteur de la bosse des rangées bord.

Dans le cas de bloc en forme de losange dont les diagonales sont sensiblement alignées avec les directions transversale et circonférentielle, il est également possible d'appliquer le concept de l'invention. Dans un tel cas, chaque bloc ayant quatre arêtes présente deux arêtes contiguës rentrant dans le même temps dans le contact avec la chaussée et deux autres arêtes sortant dans le même temps du contact. Pour éviter toute usure irrégulière, il est proposé de disposer un motif en relief sur les deux arêtes sortant dans le même temps du contact.

Les bandes de roulement selon l'invention peuvent être réalisées séparément sous forme d'anneau fermé par exemple.

## Revendications

1. Bande de roulement pour pneumatique destiné à équiper un véhicule poids lourd comportant des nervures (**3**) d'orientation sensiblement longitudinale, chaque nervure (**3**) comportant une face de contact (**4, 14, 14'**) destinée à venir en contact avec la chaussée au cours du roulage et au moins deux faces latérales (**5, 6, 15, 16, 15', 16'**), l'intersection de la face de contact avec chacune des faces latérales formant une arête (**7, 8, 19, 20, 19', 20'**), la face de contact (**4**) de ces nervures présentant dans un plan de coupe transversal (c'est-à-dire un plan contenant la direction transversale de la bande de roulement et sensiblement perpendiculaire à la face de contact de ladite bande), une trace ayant un profil géométrique P s'étendant entre des points **A1** et **A2** situés chacun sur une des arêtes de la nervure, ledit profil géométrique P présentant deux bosses (**9, 10**) en relief par rapport à une droite virtuelle **D** passant par les points **A1** et **A2,** la première bosse (**9**) étant située au voisinage de l'arête (**7**) passant par **A1,** la seconde bosse (**10**) étant située au voisinage de l'arête (**8**) passant par **A2,** le point **B1** de la première bosse (**9**) le plus à l'extérieur par rapport à la bande est situé à une distance **H1** de la droite **D** et à une distance **D1** du point **A1,** la distance **D1** étant mesurée par rapport à une perpendiculaire à la droite **D** et passant par le point **A1** ; le point **B2** de la seconde bosse (**10**) le plus à l'extérieur par rapport à la bande étant situé à une distance **H2** de la droite **D** et à une distance **D2** du point **A2,** la distance **D2** étant mesurée par rapport à une perpendiculaire à la droite **D** et passant par le point **A2;** ce profil **P** passe entre les points **B1** et **B2** par un point **C** situé à une distance **Hc** de la droite **D;** ce profil P étant **caractérisé en ce que** :

- pour au moins une nervure (**3**), les bosses (**9,10**) ont des hauteurs différentes (**H1** ou **H2**), la bosse de hauteur maximale étant disposée de manière à être axialement à l'extérieur par rapport à l'autre bosse, et **en ce que** :

- $0.1 \le D1/L \le 0.25$ ; où **L** est la distance entre les points **A1** et **A2**;

- $0.1 \le D2/L \le 0.25$;

- $0.1 \text{ mm} \le H1 \le 2.5 \text{ mm}$;

- $0.1 \text{ mm} \le H2 \le 2.5 \text{ mm}$;

- $0 \text{ mm} \le Hc \le (H1+H2)/4$.

2. Bande de roulement selon la revendication 1 **caractérisé en ce que** :

- $0.1 \text{ mm} \le H1 \le 0.4 \text{ mm}$;
- $0.1 \text{ mm} \le H2 \le 0.4 \text{ mm}$;

3. Bande de roulement selon la revendication **1** ou la revendication **2 caractérisé en ce que** le point **C** est sur la droite **D** passant par **A1** et **A2** (**Hc** = **0**).

4. Bande de roulement pour pneumatique pour véhicule poids lourd, cette bande présentant une sculpture formée par une pluralité de rainures et/ou d'incisions d'orientation générale circonférentielle (**12**) et transversale (**13**), lesdites rainures et/ou incisions délimitant une pluralité de blocs de gomme (**11, 11'**), ces blocs présentant une face supérieure (**14, 14'**) formant une partie de la surface de roulement du pneumatique destinée à venir en contact avec la chaussée pendant le roulage, deux faces latérales (**15, 16, 15', 16'**) espacées dans la direction transversale (correspondant à la direction axiale du pneumatique) et des faces avant et arrière (**17, 18, 17', 18'**), la face avant coupant la face supérieure selon une première arête dite arête d'attaque (**19, 19'**), tandis que la face arrière coupe la face supérieure selon une seconde arête dite arête de fuite (**20, 20'**), la sculpture est telle qu'à l'état neuf au moins un bloc de la bande de roulement a, vu dans tout plan de coupe longitudinal (c'est-à-dire tout plan contenant la direction longitudinale de la bande de roulement et sensiblement perpendiculaire à la face de contact du bloc), la trace de sa face de contact sur ce plan définie par un profil géométrique P s'étendant entre deux points **A1** et **A2, A1** étant le point d'intersection de l'arête d'attaque avec le plan de coupe et **A2** étant le point d'intersection de l'arête de fuite avec ce même plan de coupe, ledit bloc (**11**) étant pourvu sur sa face de contact avec une bosse (**21**) située au voisinage de l'arête d'attaque (**19**) et avec une bosse (**22**) située au voisinage de l'arête de fuite (**20**), lesdites bosses (**21, 22, 21'**) étant en relief par rapport à une droite virtuelle **D** passant par les points **A1** et **A2,** le point **B1** de la première bosse (**9**) le plus à l'extérieur par rapport à la bande est situé à une distance **H1** de la droite **D** et à une distance **D1** du point **A1,** la distance **D1** étant mesurée par rapport à une perpendiculaire à la droite **D** et passant par le point **A1** ; le point **B2** de la seconde bosse (**10**) le plus à l'extérieur par rapport à la bande étant situé à une distance **H2** de la droite **D** et à une distance **D2** du point **A2,** la distance **D2** étant mesurée par rapport à une perpendiculaire à la droite **D** et passant par le point **A2;** ce profil P passant entre les points **B1** et **B2** par un point C situé à une distance **Hc** de la droite **D** et sensiblement à mi distance entre les points **A1** et **A2;** ce profil P étant **caractérisé en ce que** :

- les hauteurs **H1, H2** des bosses (**21**, **22**) d'un même bloc (**11**) sont différentes et

- $0.1 \le D1/L \le 0.25$ ; où **L** est la distance entre les points A1 et A2;

- $0.1 \le D2/L \le 0.25$;

- $0.1 \text{mm} \le H1 \le 2.5 \text{mm}$;

- **0.1** mm ≤**H2**≤ **2.5** mm;

- **0** mm ≤ **Hc**≤ **(H1+H2)/4**.

5. Bande de roulement selon la revendication 4 **caractérisé en ce que** au moins certains des blocs de sculpture ont leurs faces d'attaque présentant un angle de dépouille supérieur à **90°**.

6. Bande de roulement selon la revendication 4 **caractérisé en ce que** le profil P de la face de contact, vu dans un plan de coupe longitudinal, est dissymétrique, la distance **D2** du point **B2** à la droite perpendiculaire à la droite **D** et passant par **A2** étant supérieure à la distance **D1** du point **B1** à la droite passant par **A1** et perpendiculaire à la droite **D**.

7. Pneumatique comportant une bande de roulement définie selon l'une quelconque des revendications 1 à 6.

**Patentansprüche**

1. Lauffläche für einen für Schwerlastwagen bestimmten Luftreifen, die im wesentlichen im Längsrichtung ausgerichtete Rippen (3) aufweist, wobei jede Rippe (3) eine Kontaktfläche (4, 14, 14') , die dazu bestimmt ist, beim Fahren mit der Straße in Kontakt zu kommen, und mindestens zwei Seitenflächen (5, 6, 15, 16, 15', 16') aufweist, wobei die Schnittstelle der Kontaktfläche mit jeder der beiden Seitenflächen eine Kante (7, 8, 19, 20, 19', 20') bildet, wobei die Kontaktfläche (4) dieser Rippen in einer Querschnittsebene (d.h. einer Ebene, die die Querrichtung der Lauffläche enthält und im wesentlichen senkrecht zur Kontaktfläche der Lauffläche liegt) einen Verlauf aufweist, der ein geometrisches Profil P hat, das sich zwischen Punkten A1 und A2 erstreckt, die sich je auf einer der Kanten der Rippe befinden, wobei das geometrische Profil P zwei Wölbungen (9, 10) aufweist, die bezüglich einer durch die Punkte A1 und A2 verlaufenden virtuellen Geraden D vorstehen, wobei die erste Wölbung (9) sich in der Nähe der durch A1 verlaufenden Kante (7) befindet, während die zweite Wölbung (10) sich in der Nähe der durch A2 verlaufenden Kante (8) befindet, wobei der Punkt B 1 der ersten Wölbung (9), der bezüglich der Lauffläche am weitesten außen liegt, sich in einem Abstand H 1 von der Geraden D und einem Abstand D1 vom Punkt A1 befindet, wobei der Abstand D 1 bezüglich einer Senkrechten zur Geraden D gemessen wird, die durch den Punkt A 1 verläuft; wobei der Punkt B2 der zweiten Wölbung (10), der bezüglich der Lauffläche am weitesten außen liegt, sich in einem Abstand H2 von der Geraden D und einem Abstand D2 vom Punkt A2 befindet, wobei der Abstand D2 bezüglich einer Senkrechten zur Geraden D gemessen wird, die durch den Punkt A2 verläuft; dieses Profil P verläuft zwischen den Punkten B 1 und B2 durch einen Punkt C, der sich in einem Abstand Hc von der Geraden D befindet;
wobei dieses Profil P **dadurch gekennzeichnet ist, dass**:

- für mindestens eine Rippe (3) die Wölbungen (9, 10) unterschiedliche Höhen (H1 oder H2) haben, wobei die Wölbung mit der größten Höhe so angeordnet ist, dass sie bezüglich der anderen Wölbung axial außen liegt, und dass:

- 0,1 ≤ D1/L ≤ 0,25; wobei L der Abstand zwischen den Punkten A1 und A2 ist;
- 0,1 ≤ D2/L ≤ 0,25;
- 0,1 mm ≤ H1 ≤ 2,5 mm;
- 0,1 mm ≤ H2 ≤ 2,5 mm;
- 0 mm ≤ Hc ≤ (H1+H2)/4.

2. Lauffläche nach Anspruch 1, **dadurch gekennzeichnet, dass**:

- 0,1 mm ≤ H1 ≤ 0,4 mm;
- 0 mm ≤ H2 ≤ 0,4 mm.

3. Lauffläche nach Anspruch 1 oder Anspruch 2, **dadurch gekennzeichnet, dass** der Punkt C sich auf der Geraden D befindet, die durch A1 und A2 verläuft (Hc = 0).

4. Lauffläche für einen Schwerlastwagen-Luftreifen, wobei diese Lauffläche ein Profil aufweist, das von mehreren Rillen und/oder Einschnitten gebildet wird, die allgemein in Umfangsrichtung (12) bzw. Querrichtung (13) ausgerichtet sind, wobei die Rillen und/oder Einschnitte mehrere Gummiblöcke (11, 11') begrenzen, wobei diese Blöcke eine Oberfläche (14, 14'), die einen Teil der Abrollfläche des Luftreifens bildet, der dazu bestimmt ist, während des Fahrens mit der Straße in Kontakt zu kommen, zwei Seitenflächen (15, 16, 15', 16'), die in Querrichtung (entsprechend der axialen Richtung des Luftreifens) einen Abstand haben, und eine Vorder- und eine Hinterfläche (17, 18, 17', 18') aufweisen, wobei die Vorderfläche die Oberfläche entlang einer ersten Kante, Vorderkante (19, 19') genannt, schneidet, während die Hinterfläche die Oberfläche entlang einer zweiten Kante, Hinterkante (20, 20') genannt, schneidet, wobei das Profil derart ist, dass im Neuzustand der Verlauf der Kontaktfläche mindestens eines Blocks der Lauffläche, gesehen in jeder Längsschnittebene (d.h. jeder Ebene, die die Längsrichtung der Lauffläche enthält und im wesentlichen senkrecht zur Kontaktfläche des Blocks liegt), in dieser Ebene von einem geometrischen Profil P definiert wird, das sich zwischen zwei Punkten A1 und A2 erstreckt, wobei A1 der Schnittpunkt zwischen der Vorderkante und der Schnittebene und A2 der Schnittpunkt zwischen der Hinterkante und dieser gleichen Schnittebene ist, wobei der Block (11) auf seiner Kontaktfläche mit einer Wölbung (21), die sich in der Nähe der Vorderkante (19) befindet, und mit einer Wölbung (22) versehen ist, die sich in der Nähe der Hinterkante (20) befindet, wobei die Wölbungen (21, 22, 21') bezüglich einer virtuellen Geraden D vorstehen, die durch die Punkte A1 und A2 verläuft, wobei der Punkt B 1 der ersten Wölbung (9), der bezüglich der Lauffläche am weitesten außen liegt, sich in einem Abstand H 1 von der Geraden D und einem Abstand D 1 vom Punkt A 1 befindet, wobei der Abstand D1 bezüglich einer durch den Punkt A 1 verlaufenden Senkrechten zur Gerade D gemessen wird, wobei der Punkt B2 der zweiten Wölbung (10), der bezüglich der Lauffläche am weitesten außen liegt, sich in einem Abstand H2 von der Geraden D und einem Abstand D2 vom Punkt A2 befindet, wobei der Abstand D2 bezüglich einer durch den Punkt A2 verlaufenden Senkrechten zur Geraden D gemessen wird, wobei dieses Profil P zwischen den Punkten B 1 und B2 durch einen Punkt C verläuft, der sich in einem Abstand Hc von der Geraden D und im wesentlichen in halbem Abstand zwischen den Punkten A1 und A2 befindet, wobei dieses Profil P **dadurch gekennzeichnet ist, dass**:

- die Höhen H1, H2 der Wölbungen (21, 22) eines gleichen Blocks (11) unterschiedlich sind, und
- $0,1 \leq D1/L \leq 0,25$; wobei L der Abstand zwischen den Punkten A1 und A2 ist;
- $0,1 \leq D2/L \leq 0,25$;
- $0,1 \text{ mm} \leq H1 \leq 2,5 \text{ mm}$;
- $0,1 \text{ mm} \leq H2 \leq 2,5 \text{ mm}$;
- $0 \text{ mm} \leq Hc \leq (H1+H2)/4$.

5. Lauffläche nach Anspruch 4, **dadurch gekennzeichnet, dass** die Vorderfläche zumindest mancher der Profilblöcke einen Freiwinkel von mehr als 90° aufweist.

6. Lauffläche nach Anspruch 4, **dadurch gekennzeichnet, dass** das Profil P der Kontaktfläche, gesehen in einer Längsschnittebene, unsymmetrisch ist, wobei der Abstand D2 des Punkts B2 zu der Geraden, die senkrecht zur Geraden D und durch A2 verläuft, größer ist als der Abstand D 1 des Punkts B zur durch A1 verlaufenden und zur Geraden D senkrechten Geraden ist.

7. Luftreifen, der eine Lauffläche aufweist, wie sie gemäß einem der Ansprüche 1 bis 6 definiert wird.

**Claims**

1. Tread for a tyre intended to equip a heavy vehicle, comprising ribs (3) of substantially longitudinal orientation, each rib (3) comprising a contact face (4, 14, 14') intended to come into contact with the road during rolling and at least two lateral faces (5, 6, 15, 16, 15', 16'), the intersection of the contact face with each of the lateral faces forming an edge (7, 8, 19, 20, 19', 20'), the contact face (4) of these ribs having, in a plane of transverse cross section (that is to say a plane containing the transverse direction of the tread and substantially perpendicular to the contact face of the said tread), a plot having a geometrical profile P extending between points A1 and A2 each located on one of the edges of the rib, the said geometrical profile P having two bumps (9, 10) in relief relative to a virtual straight line D passing through the points A1 and A2, the first bump (9) being located in the region of the edge (7) passing through A1, the second bump (10) being located in the region of the edge (8) passing through A2, the point B1 of the first bump (9) that is outermost relative to the tread is located a distance H1 from the straight line D and a distance D1 from the point A1, the distance D1 being measured relative to a perpendicular to the straight line D and passing through the point A1; the point B2 of the second bump (10) that is outermost relative to the tread being located a distance H2 from the straight line D and a distance D2 from the point A2, the distance D2 being measured relative to a perpendicular to the straight line D and passing through the point A2; this profile P passes between the points B1 and B2 through a point C located a distance Hc from the straight line D;
this profile P being **characterized in that**:

- for at least one rib (3), the bumps (9, 10) have different heights (H1 or H2), the bump of maximum height being arranged so as to be axially external relative to the other bump, and **in that**:

- $0.1 \leq D1/L \leq 0.25$; where L is the distance between the points A1 and A2;
- $0.1 \leq D2/L \leq 0.25$;
- $0.1 \text{ mm} \leq H1 \leq 2.5 \text{ mm}$;
- $0.1 \text{ mm} \leq H2 \leq 2.5 \text{ mm}$;
- $0 \text{ mm} \leq Hc \leq (H1+H2)/4$.

2. Tread according to Claim 1, **characterized in that**:

- $0.1 \text{ mm} \leq H1 \leq 0.4 \text{ mm}$;
- $0.1 \text{ mm} \leq H2 \leq 0.4 \text{ mm}$.

3. Tread according to Claim 1 or Claim 2, **characterized in that** the point C is on the straight line D passing through A1 and A2 (Hc = 0).

**4.** Tread for a heavy vehicle tyre, this tread having a tread pattern formed from a plurality of grooves and/or incisions generally of circumferential (12) and transverse (13) orientation, the said grooves and/or incisions delimiting a plurality of rubber blocks (11, 11'), these blocks having a top face (14, 14') forming a part of the rolling surface of the tyre and intended to come into contact with the road during rolling, two spaced lateral faces (15, 16, 15', 16') in the transverse direction (corresponding to the axial direction of the tyre) and front and rear faces (17, 18, 17', 18'), the front face cutting the top face along a first edge, referred to as the leading edge (19, 19'), while the rear face cuts the top face along a second edge, referred to as the trailing edge (20, 20'), the tread pattern is such that, in the new state, at least one block of the tread has, viewed in any plane of longitudinal cross section (that is to say any plane containing the longitudinal direction of the tread and substantially perpendicular to the contact face of the block), the plot of its contact face on this plane defined by a geometrical profile P extending between two points A1 and A2, A1 being the point of intersection of the leading edge with the cross-sectional plane and A2 being the point of intersection of the trailing edge with this same cross-sectional plane, the said block (11) being provided on its contact face with a bump (21) located in the region of the leading edge (19) and with a bump (22) located in the region of the trailing edge (20), the said bumps (21, 22, 21') being in relief relative to a virtual straight line D passing through the points A1 and A2, the point B1 of the first bump (9) that is outermost relative to the tread is located a distance H1 from the straight line D and a distance D1 from the point A1, the distance D1 being measured relative to a perpendicular to the straight line D and passing through the point A1; the point B2 of the second bump (10) that is outermost relative to the tread being located a distance H2 from the straight line D and a distance D2 from the point A2, the distance D2 being measured relative to a perpendicular to the straight line D and passing through the point A2; this profile P passing between the points B1 and B2 through a point C located a distance Hc from the straight line D and substantially halfway between the points A1 and A2; this profile P being **characterized in that**:

- the heights H1, H2 of the bumps (21, 22) of the same block (11) are different and
- $0.1 \leq D1/L \leq 0.25$; where L is the distance between the points A1 and A2;
- $0.1 \leq D2/L \leq 0.25$;
- $0.1 \text{ mm} \leq H1 \leq 2.5 \text{ mm}$;
- $0.1 \text{ mm} \leq H2 \leq 2.5 \text{ mm}$;
- $0 \text{ mm} \leq Hc \leq (H1+H2)/4$.

**5.** Tread according to Claim 4, **characterized in that** at least some of the tread pattern blocks have their leading faces at a clearance angle of greater than 90°.

**6.** Tread according to Claim 4, **characterized in that** the profile P of the contact face, viewed in a plane of longitudinal cross section, is dissymmetric, the distance D2 from the point B2 to the straight line perpendicular to the straight line D and passing through A2 being greater than the distance D1 from the point B1 to the straight line passing through A1 and perpendicular to the straight line D.

**7.** Tyre comprising a tread defined according to any one of Claims 1 to 6.

FIG. 1

COUPE SELON II-II

FIG. 2

FIG. 3

FIG. 4

COUPE SELON IV-IV

FIG. 5

COUPE SELON V-V